# EUROPÄISCHE PATENTSCHRIFT

(11) **EP 3 552 688 B1**
(45) Veröffentlichungstag und Bekanntmachung des Hinweises auf die Patenterteilung: **02.03.2022**
(21) Anmeldenummer: 19168907.4
(22) Anmeldetag: 12.04.2019
(51) Int. Cl.: B01D 53/14, B01D 53/62, B01D 53/96, C10L 3/10

(54) **VERFAHREN ZUR NUTZUNG CO2-HALTIGER GASE UNTER VERWENDUNG ORGANISCHER BASEN**
METHOD FOR THE UTILIZATION OF GASSES CONTAINING CO2 USING ORGANIC BASES
PROCÉDÉ D'UTILISATION DE GAZ CONTENANT DU CO2 AU MOYEN DE BASES ORGANIQUES

(30) Priorität: 13.04.2018 DE 102018205635
(43) Veröffentlichungstag der Anmeldung: 16.10.2019
(73) Patentinhaber: Fraunhofer-Gesellschaft zur Förderung der angewandten Forschung e.V., 80686 München (DE)
(72) Erfinder: Bruzzano, Stefano, 47051 Duisburg (DE); Lohmann, Heiko, 44805 Bochum (DE); Mölders, Nils, 45470 Mühlheim a. d. R. (DE); Peters, Sarah, 41751 Viersen (DE); Renner, Manfred, 45130 Essen (DE); Zeidler-Fandrich, Barbara, 46117 Oberhausen (DE)

(56) Entgegenhaltungen:
- WO-A2-2015/092427
- DE-A1-102010 017 143
- US-A1- 2012 060 686
- US-A1- 2013 280 151
- US-A1- 2015 014 182
- BALAKA BARKAKATY ET AL: "Amidine-mediated delivery of CO2 from gas phase to reaction system for highly efficient synthesis of cyclic carbonates from epoxides", GREEN CHEMISTRY, Bd. 12, Nr. 1, 29. Oktober 2009 (2009-10-29), Seiten 42-44, XP055226266, GB ISSN: 1463-9262, DOI: 10.1039/B916235F
- SABET-SARVESTANI HOSSEIN ET AL: "A theoretical study on the efficiency and role of guanidines-based organic superbases on carbon dioxide utilization in quinazoline-2,4(1H, 3H)-diones synthesis", STRUCTURAL CHEMISTRY, SPRINGER US, NEW YORK, Bd. 28, Nr. 3, 15. September 2016 (2016-09-15), Seiten 675-686, XP036226748, ISSN: 1040-0400, DOI: 10.1007/S11224-016-0842-6 [gefunden am 2016-09-15]
- ZHEN-ZHEN YANG ET AL: "CO2 capture and activation by superbase/polyethylene glycol and its subsequent conversion", ENERGY & ENVIRONMENTAL SCIENCE, Bd. 4, Nr. 10, 11. August 2011 (2011-08-11), Seiten 3971-3975, XP055588203, Cambridge ISSN: 1754-5692, DOI: 10.1039/c1ee02156g

## Beschreibung

Die vorliegende Erfindung betrifft ein Verfahren zur CO₂-Abscheidung und -Verwendung.

CO₂ fungiert in der Atmosphäre als Treibhausgas und ist daher eine der Hauptursachen der durch den Menschen verursachten globalen Erwärmung. Ein Ansatz für die Verringerung der CO₂-Emission in die Atmosphäre ist beispielsweise die Abtrennung des CO₂ aus den CO₂-haltigen Mischgasen, die bei industriellen Prozessen anfallen, und die geologische Speicherung des abgetrennten CO₂. Dieser Ansatz wird auch als *"CO₂-Abscheidung und -Speicherung"* (englisch: *"Carbon Dioxide Capture and Storage"* bzw. *"CCS")* bezeichnet.

Eine Übersicht zu bekannten Verfahren im Rahmen der CCS-Technologie liefern beispielsweise D. Leung et al., Renewable and Sustainable Energy Reviews, 39, 2014, S. 426-443.

Eine Möglichkeit für die CO₂-Abtrennung ist die Einleitung des CO₂-haltigen Abgases in eine Absorberlösung, in der das CO₂ physikalisch oder chemisch "fixiert" wird. Eine diesbezügliche Übersicht bekannter Methoden und Absorberlösungen liefern beispielsweise Z. Zhang et al., Energy Procedia, 63, 2014, S. 1339-1346, sowie E. Oko et al., Int. J. Coal Sci. Technol., 4, 2017, S. 5-14.

Derzeit werden insbesondere Absorberlösungen verwendet, die Amine und Alkanolamine (wie z.B. Monoethanolamin MEA) enthalten.

Es sind aber auch alternative Absorberlösungen für die Abtrennung des CO₂ aus CO₂-haltigen Abgasen bekannt.

DE 10 2010 017 143 A1 beschreibt ein Verfahren zum Abtrennen von CO₂ aus einem Gasgemisch und/oder Gasstrom, umfassend das Inkontaktbringen des Gasgemisches und/oder Gasstroms mit einer Flüssigkeit, die ein Amidinderivat, Wasser und ein aprotisches Solvens enthält, so dass ein zumindest teilweise unlösliches Amidin-CO₂-Addukt entsteht.

WO 2008/068411 A2 beschreibt ein Verfahren zur CO₂-Abtrennung und -Speicherung, bei dem das CO₂-haltige Mischgas in ein flüssiges CO₂-Extraktionsmedium eingeleitet wird, wobei in dem flüssigen Extraktionsmedium ein Säure/Base-Addukt eines Amidin- oder Guanidinderivats und einer Hydroxyverbindung vorliegt.

WO 2013/017481 A1 beschreibt eine CO₂-Absorptionsflüssigkeit, die eine wässrige Lösung einer waschaktiven Substanz auf Basis von Aminen, Ethanolaminen, Aminosäuresalzen oder Pottasche sowie eines aktivierenden Zusatzstoffes enthält, wobei der aktivierende Zusatzstoff ein anorganischer Katalysator ist.

Alternativ zur *"Carbon Dioxide Capture and Storage* (CCS)"-Technologie gibt es den Ansatz, das abgetrennte CO₂ als Reaktant für die Synthese ausgewählter Produkte einzusetzen. Dieser Ansatz wird auch als *"CO₂-Abscheidung und Nutzung"* (englisch: *"Carbon Dioxide Capture and Utilization"* bzw. *"CCU")* bezeichnet.

DE 10 2012 020 141 A1 beschreibt ein CCU-Verfahren (*"Carbon Dioxide Capture and Utilization")* zur Absorption von Kohlendioxid aus Rauchgas und anderen CO₂-haltigen Substanzquellen und gleichzeitiger Synthese von Dialkylcarbonaten und Alkylencarbonaten. Das CO₂-haltige Mischgas wird in eine Amin-haltige Lösung eingeleitet, wobei sich ein Zwischenprodukt bildet, das anschließend mit Alkoholen zu organischen Carbonaten umgesetzt wird. Als geeignete Amine werden insbesondere Ammoniak und primäre Alkylamine mit bis zu 6 Kohlenstoffatomen (beispielsweise Methylamin, Ethylamin oder Propylamin) genannt.

WO 2013/006710 A2 beschreibt ein CCU-Verfahren, bei dem (i) ein CO₂-haltiges Gas in den anodischen Teil einer elektrochemischen Zelle eingeleitet wird, wobei in der Anode ein Guanidin- oder Pyrimidinderivat vorliegt, das mit dem eingeleiteten CO₂ ein Zwitterion bildet, und (ii) anschließend eine Spannung angelegt wird, so dass das Zwitterion elektrochemisch reduziert wird.

Im Rahmen der synthetischen organischen Chemie stellt CO₂ einen Synthesebaustein dar, der mit anderen Reaktanten zu interessanten Produkten umgesetzt werden kann. Da CO₂ allerdings reaktionsträge ist, erfordern diese Umsetzungen üblicherweise die Anwesenheit eines Katalysators. Dabei kann es sich beispielsweise um einen Übergangsmetall-basierten Katalysator handeln, der jedoch aus Kosten- und/oder Umweltgründen nachteilig sein kann.

Bekannt ist auch die Verwendung von Organokatalysatoren für die Umsetzung von CO₂ mit anderen Reaktanten. Eine diesbezügliche Übersicht liefern G. Fiorani et al., Green Chem., 17 (3), 2015, S. 1375. Als mögliche Organokatalysatoren werden unter anderen organische Superbasen wie Amidine oder Guanidinderivate genannt. Um hohe Ausbeuten zu erzielen und die Anwesenheit störender Komponenten, die möglicherweise als Katalysatorgift fungieren könnten, zu vermeiden, kommt üblicherweise reines CO₂ zum Einsatz.

E. Perez Gonzalez et al., Tetrahedron, 64, 2008, S. 10097-10106, beschreiben die Herstellung von Carbamaten durch ein Verfahren, bei dem reines CO₂ in eine Lösung, in der ein Guanidinderivat vorliegt, eingeleitet wird und das sich dabei bildende Addukt anschießend mit einem Amin und einem Alkylhalogenid zu einem Carbamat umgesetzt wird.

Liang-Nian He et al., Energy Environ. Sci., 4, 2011, S. 3971-3975, beschreiben ein Verfahren zur Herstellung von Dibutylharnstoff, wobei reines CO₂ in eine Flüssigkeit, die eine organische Superbase enthält, eingeleitet wird und das sich dabei bildende Addukt anschießend mit Butylamin zu Dibutylharnstoff umgesetzt wird.

Die bei technischen Prozessen anfallenden CO₂-haltigen Mischgase bzw. Abgase enthalten häufig weitere Komponenten, von denen bekannt ist, dass sie als Katalysatorgifte wirken können (z.B. Schwefeloxide wie SO₂ und SO₃). Außerdem liegt das CO₂ in diesen Mischgassen verdünnt vor, was sich wiederum nachteilig auf die Effizienz bzw. Ausbeute einer nachgeschalteten chemischen Synthese auswirken kann.

US 2015/014182 A1 beschreibt ein Verfahren zur Abtrennung von CO₂ aus einem CO₂-haltigen Gas und die anschließende Nutzung des CO₂ für die Brennstoffherstellung. Die Absorberflüssigkeit enthält Nanopartikel und eine flüssige Komponente. Die Umsetzung des CO₂ zu einem Brennstoff erfolgt elektrochemisch.

WO 2015/092427 A2 beschreibt ein Verfahren zur Abtrennung von CO₂ aus einem Abgas durch Inkontaktbringen mit einer Absorberlösung und die anschließende Freisetzung des CO₂ aus dieser Lösung, wobei
- in Schritt (a) ein CO₂-haltiges Gas in die Absorberlösung, die ein Carbonsäuresalz und ein mit Wasser mischbares organisches Lösungsmittel enthält, eingeleitet wird, so dass das CO₂ in der Absorberlösung absorbiert wird;
- anschließend in Schritt (b) das CO₂ durch Zugabe eines protischen Lösungsmittel wieder freigesetzt wird; und
- in Schritt (c) die Absorberlösung durch Abtrennen des protischen Lösungsmittels regeneriert wird, so dass sie erneut mit einem CO₂-haltigen Gas in Kontakt gebracht werden kann.

B. Barkakaty et al., Green Chem., 12, 2010, S. 42-44, beschreiben das Einleiten von reinem CO₂ in eine Amidin-haltige Lösung und die anschließende Umsetzung des CO₂ mit einem Epoxid.

H. Sabet-Sarvestani et al., Struct. Chem., 28, 2017, S. 675-686, untersuchen in einer theoretischen Studie die Wirksamkeit Guanidin-basierter Superbasen bei der Verwendung von CO₂ für die Synthese von Chinazolin-2,4(1H,3H)-dion.

Eine Aufgabe der vorliegenden Erfindung liegt in der Bereitstellung eines Verfahrens, mit dem sich CO₂ aus CO₂-haltigen Mischgasen (wie z.B. Rauchgasen, Abgasen aus der Ammoniakherstellung oder sonstigen CO₂-haltigen Abgasen aus technischen Prozessen) entfernen und anschließend für chemische Synthesen nutzen lässt.

Gelöst wird die Aufgabe durch ein Verfahren zur CO₂-Abscheidung und -Nutzung, umfassend:
- Einleiten eines CO₂-haltigen Mischgases in eine Flüssigkeit, die eine organische Superbase oder ein Salz einer organischen Superbase enthält, so dass sich ein CO₂-Superbase-Addukt, in dem das CO₂ chemisch gebunden ist, bildet, wobei
   - die organische Superbase ein Amidin oder ein Guanidinderivat oder ein Gemisch davon ist und
   - die Flüssigkeit ein cyclisches Amid oder eine cyclische Harnstoffverbindung als Lösungsmittel enthält,
- Umsetzung des CO₂-Superbase-Addukts mit einem oder mehreren chemischen Reaktionspartnern unter Bildung eines Reaktionsprodukts, wobei der Reaktionspartner, mit dem das CO₂-Superbase-Addukt umgesetzt wird, ein Amin, ein Aminobenzonitril, ein Alkinol, ein Epoxid, ein Aziridin oder ein Reduktionsmittel oder eine Kombination aus mindestens zwei dieser Reaktionspartnerein ist, wobei das Reduktionsmittel ein Silan oder Wasserstoff ist.

Im Rahmen der vorliegenden Erfindung wurde erkannt, dass ein flüssiges Absorbermedium, das eine organische Superbase wie z.B. ein Amidin oder ein Guanidinderivat oder ein Salz dieser organischen Superbase enthält, in sehr effizienter Weise CO₂ aus einem CO₂-haltigen Mischgas chemisch binden kann und das dabei erhaltene CO₂-Superbase-Addukt eine ausreichend hohe Reaktivität für anschließende chemische Synthesen aufweist, selbst wenn das CO₂-Mischgas potentielle Katalysatorgifte enthält und der Anteil des CO₂ im Mischgas relativ gering ist.

Das Mischgas enthält neben dem CO₂ noch zumindest eine weitere gasförmige Verbindung. Beispielsweise enthält das CO₂-haltige Mischgas eine oder mehrere der folgenden gasförmigen Verbindungen: Stickstoff, ein oder mehrere Schwefeloxide (insbesondere SO₂ und/oder SO₃), ein oder mehrere Stickoxide (NOx wie z.B. NO und/oder NO₂), Wasserdampf, NH₃, Methan, CO oder eine Schwefelverbindung (beispielsweise Schwefelwasserstoff (H₂S) oder ein Thiol) oder ein Gemisch aus mindestens zwei dieser gasförmigen Verbindungen.

Unter einem Mischgas wird auch ein Aerosol verstanden. Neben dem CO₂ und einer oder mehrerer zusätzlicher gasförmiger Verbindungen kann das Mischgas somit auch flüssige oder feste Schwebeteilchen enthalten.

Das CO₂-haltige Mischgas ist beispielsweise ein Abgas aus einem Verbrennungsprozess (z.B. ein Rauchgas), ein Gas aus der Biogasaufbereitung, ein Abgas aus der Ammoniaksynthese (Haber-Bosch-Verfahren), ein bei der Bioethanolherstellung anfallendes Mischgas oder ein Abgas eines Stahlwerks (d.h. ein bei der Stahlherstellung anfallendes Mischgas).

Als Rauchgas wird ein Abgas aus einer großtechnischen, üblicherweise ortsfesten Verbrennungsanlage (beispielsweise ein Kraftwerk) bezeichnet. Das Rauchgas kann optional Ruß- und/oder Staubpartikel enthalten. Das Rauchgas enthält beispielsweise Stickstoff (N₂), ein oder mehrere Schwefeloxide (z.B. SO₂ und/oder SO₃) und ein oder mehrere Stickoxide (NOx wie NO und NO₂).

Ein CO₂-haltigesGas, das bei der Biogasaufbereitung anfällt, enthält beispielsweise neben CO₂ auch noch Methan (CH₄).

Ein Abgas, das bei der Ammoniaksynthese anfällt, enthält neben CO₂ zumindest noch NH₃.

Ein bei der Bioethanolherstellung anfallendes Mischgas enthält neben CO₂ beispielsweise noch Wasserdampf.

Ein bei der Stahlherstellung anfallendes Mischgas enthält neben CO₂ beispielsweise noch eine oder mehrere der folgenden gasförmigen Verbindungen: CO, H₂, ein oder mehrere Stickoxide (NOx wie NO und NO₂), ein oder mehrere Schwefeloxide (z.B. SO₂ und/oder SO₃).

Die Flüssigkeit, in die das CO₂-haltige Mischgas eingeleitet wird, enthält zumindest eine organische Superbase oder ein Salz dieser organischen Superbase.

Organische Superbasen sind dem Fachmann bekannt.

Die organische Superbase ist ein Amidin oder ein Guanidinderivat.

Das Amidin oder das Guanidinderivat kann beispielsweise eine heterocyclische Verbindung sein. Die heterocyclische Verbindung ist z.B. eine bicyclische Verbindung. Bei der bicyclischen Verbindung kann es sich beispielsweise um eine anellierte oder eine verbrückte bicyclische Verbindung handeln. "Anelliert" bedeutet, dass beide Ringe eine gemeinsame Bindung enthalten. "Verbrückt" bedeutet, dass beide Ringe über zwei nicht benachbarte Atome verknüpft sind.

Alternativ ist es aber auch möglich, dass die Superbase keine heterocyclische Verbindung ist.

Wie dem Fachmann bekannt ist, handelt es sich bei Amidinen um eine Gruppe von Verbindungen, die sich formal aus Amiden ableiten, wobei das Sauerstoffatom der Amidgruppe durch eine Imino-Gruppe ersetzt wird.

Wie oben bereits erwähnt, kann das Amidin eine heterocyclische Verbindung (z.B. eine bicyclische heterocyclische Verbindung) sein.

Bevorzugt ist das Amidin 1,8-Diazobicyclo[5.4.0]undec-7-en (DBU), 1,5-Diazabicyclo[4.3.0]non-5-en (DBN) oder N-Methyltetrahydropyrimidine (MTHP) oder ein Gemisch aus mindestens zwei dieser Verbindungen.

Wie dem Fachman bekannt ist, handelt es sich bei einem Guanidinderivat um eine Verbindung, die sich von Guanidin H₂N-C(NH₂)=NH ableitet, wobei eines oder mehrere der H-Atome durch einen organischen Rest substituiert sind.

Wie oben bereits erwähnt, kann das Guanidinderivat eine heterocyclische Verbindung sein. Alternativ können auch nicht-heterocyclische Guanidinderivate verwendet werden.

Das Guanidinderivat weist beispielsweise folgende Strukturformel auf:

R¹R²N-C(NR³R⁴)=NR⁵

wobei
R¹, R², R³ und R⁴ unabhängig voneinander jeweils ein C₁₋₆-Alkylrest, bevorzugter ein C₁₋₄-Alkylrest sind,
R⁵ ein C₁₋₆-Alkylrest (bevorzugter ein C₁₋₄-Alkylrest) oder ein H-Atom ist.

Das Guanidinderivat ist beispielsweise ein 1,1,3,3-Tetra-C₁₋₄-Alkyl-Guanidin, insbesondere 1,1,3,3-Tetramethylguanidin.

Geeignete heterocyclische Guanidinderivate sind beispielsweise 1,5,7-Triazobicyclo[4.4.0]dec-5-en (TBD), 7-Methyl-1,5,7-triazabicyclo[4.4.0]dec-5-en (Me-TBD) oder N-(1,3-Dimethylimidazolidin-2-yliden)cyclohexylamin (DMICH).

Die Superbase kann optional auch in Form eines Salzes vorliegen, wobei die Superbase selbst das Kation bildet. Sofern die Superbase in Form eines Salzes vorliegt, kann es sich dabei beispielsweise um eine ionische Flüssigkeit handeln.

Bevorzugt enthält die Flüssigkeit, in die das CO₂-haltige Mischgas eingeleitet wird, eine oder mehrere zusätzliche Komponenten, beispielsweise einen Alkohol, einen oder mehrere Reaktionspartner für das CO₂-Superbase-Addukt, einen Katalysator (der z.B. die Umsetzung des CO₂-Superbase-Addukts mit einem Reaktionspartner unterstützen kann) oder ein Reduktionsmittel oder ein Gemisch aus mindestens zwei dieser zusätzlichen Komponenten.

Der Reaktionspartner, mit dem das beim Einleiten des CO₂-haltigen Mischgases gebildete CO₂-Superbase-Addukt umgesetzt wird, kann bereits beim Einleiten des Mischgases in der Flüssigkeit vorliegen. In diesem Fall ist es möglich, dass das CO₂-Superbase-Addukt unmittelbar nach seiner Bildung mit dem Reaktionspartner reagiert. Alternativ wird zunächst das CO₂-Superbase-Addukt, in dem das CO₂ chemisch fixiert ist, in Abwesenheit eines Reaktionspartners gebildet und erst anschließend werden das CO₂-Superbase-Addukt und der Reaktionspartner in Kontakt miteinander gebracht, um zu einem Reaktionsprodukt umgesetzt zu werden.

Die Flüssigkeit enthält beim Einleiten des CO₂-Mischgases ein Lösungsmittel.

Das Lösungsmittel ist ein cyclisches Amid oder eine cyclische Harnstoffverbindung. Das cyclische Amid ist beispielsweise ein β-, γ-, δ- oder ε-Lactam oder ein 4-Imidazolidinon, insbesondere ein γ-Lactam, besonders bevorzugt N-Methyl-2-pyrrolidon (NMP). Die cyclische Harnstoffverbindung ist beispielsweise ein 2-Imidazolidinon (z.b. 1,3-Dimethyl-2-imidazolidinon, DMI) oder ein N,N-Trimethylenharnstoff (z.B. N,N-Dimethyl-N,N-trimethylenharnstoff, DMPU)). In einer besonders bevorzugten Ausführungsform ist das Lösungsmittel N-Methyl-2-pyrrolidon.

Weitere polare Lösungsmittel, die im Rahmen der vorliegenden Erfindung beispielhaft genannt werden können, sind N,N-Dimethylformamid, Dimethylsulfoxid und Acetonitril.

Sofern die Flüssigkeit beim Einleiten des CO₂-Mischgases einen Alkohol enthält, kann dieser beispielsweise ein Monohydroxyalkohol oder auch ein Polyhydroxyalkohol (z.B. ein Diol) sein. Beispielhafte Alkohole umfassen einen C₁₋₈-Alkylalkohol (z.B. Ethanol, 1-Propanol, 1-Butanol, 1-Pentanol, 1-Hexanol oder Isopropylalkohol), Polyethylenglycol oder Polypropylenglycol oder ein Gemisch aus mindestens zwei dieser Alkohole. Das molare Verhältnis von Alkohol zu Superbase liegt beispielsweise im Bereich von 5:1 bis 1:5, bevorzugter 3:1 bis 1:3. Sofern ein Alkohol vorliegt, kann es im Rahmen der Erfindung bevorzugt sein, dass die Flüssigkeit beim Einleiten des CO₂-Mischgases auch eines oder mehrere der oben genannten Lösungsmittel enthält.

Der Druck, mit dem das CO₂-haltige Mischgas in die Superbase-haltige Flüssigkeit eingeleitet wird, kann über einen relativ breiten Bereich variieren. Beispielsweise wird das CO₂-haltige Mischgas mit einem Druck im Bereich von 1 bar bis 50 bar eingeleitet.

Das Einleiten des CO₂-haltigen Mischgases in die Superbase-haltige Flüssigkeit kann beispielsweise bei einer Temperatur im Bereich von -20°C bis 100°C, bevorzugter 0°C bis 50°C erfolgen. Sofern die Superbase-haltige Flüssigkeit bereits beim Einleiten des Mischgases einen oder mehrere Reaktionspartner für das CO₂-Superbase-Addukt enthält, kann das Einleiten des Mischgases auch bei einer höheren Temperatur erfolgen.

Beim Einleiten des CO₂-haltigen Mischgases in die Superbase-haltige Flüssigkeit bildet sich ein CO₂-Superbase-Addukt, in dem das CO₂ chemisch gebunden ist. Dieses CO₂-Superbase-Addukt wird anschließend für eine chemische Synthese eingesetzt. Durch die Bildung des CO₂-Superbase-Addukts werden die Bindungszustände des CO₂ so verändert, dass das CO₂ leichter aktivierbar ist und die nachfolgende chemische Umsetzung mit einem Reaktionspartner bei relativ niedrigen Temperaturen und Drücken durchgeführt werden kann.

Die Umsetzung des CO₂-Superbase-Addukts, in dem das CO₂ chemisch gebunden ist, mit einem oder mehreren Reaktionspartnern kann beispielsweise in dem Reaktor erfolgen, in dem zuvor bereits das CO₂-haltige Mischgas eingeleitet wurde und die Bildung des CO₂-Superbase-Addukts erfolgte. Wie oben erwähnt, können die Reaktionspartner des CO₂-Superbase-Addukts bereits beim Einleiten des Mischgases im Reaktor vorliegen. Alternativ ist es auch möglich, die Reaktionspartner erst dann dem Reaktor zugegeben, wenn die Einleitung des Mischgases abgeschlossen ist.

Alternativ ist es auch möglich, das CO₂-Superbase-Addukt aus dem Reaktor, in dem es gebildet wurde (dem "ersten" Reaktor) zu entfernen und in einen zweiten Reaktor einzubringen, in dem es mit geeigneten Reaktionspartnern zu dem gewünschten Reaktionsprodukt umgesetzt wird.

Die Umsetzung des CO₂-Superbase-Addukts mit einem oder mehreren Reaktionspartnern kann beispielsweise in einem Lösungsmittel und/oder in Anwesenheit eines Katalysators stattfinden. Bevorzugt erfolgt die Umsetzung des CO₂-Superbase-Addukts mit einem oder mehreren Reaktionspartnern in Abwesenheit eines Übergangsmetalls (wie z.B. eines Katalysators, der ein oder mehrere Übergangsmetalle enthält).

Wie oben bereits erwähnt, kann die Umsetzung des CO₂-Superbase-Addukts mit dem Reaktionspartner bzw. den Reaktionspartnern in dem gleichen flüssigen Medium stattfinden, in dem bereits das CO₂-Superbase-Addukt gebildet wurde. Die beiden Schritte, d.h. die Bildung des CO₂-Superbase-Addukts und dessen nachfolgende Umsetzung mit einem oder mehreren Reaktionspartnern, können also beispielsweise in demselben Reaktor durchgeführt werden. Die für die Umsetzung des CO₂-Superbase Addukts erforderlichen Reaktionspartner sowie optionale Komponenten (z.B. Lösungsmittel oder Katalysator) können bereits beim Einleiten des Mischgases im Reaktor vorliegen oder können alternativ dem Reaktor nach der Addukt-Bildung zugegeben werden.

Bei der Umsetzung des CO₂-Superbase-Addukts mit einem Reaktionspartner wird die Superbase wieder freigesetzt und steht für weitere CO₂-Abtrennungs- und Reaktionszyklen zur Verfügung.

Nach der Bildung des Reaktionsprodukts kann die entstandene Produktlösung einer Aufbereitungsbehandlung unterzogen werden, bei der das Reaktionsprodukt isoliert wird und die Superbase in den Prozess zurückgeführt und wieder für die Bildung eines CO₂-Superbase-Addukts eingesetzt wird.

Der Reaktionspartner, mit dem das CO₂-Superbase-Addukt umgesetzt wird, ist ein Amin, ein Aminobenzonitril (z.B. 2-Aminobenzonitril), ein Alkinol, ein Epoxid, ein Aziridin oder ein Reduktionsmittel (ein Silan oder Wasserstoff) oder eine Kombination aus mindestens zwei dieser Reaktionspartner.

In einer beispielhaften Ausführungsform wird das CO₂-Superbase-Addukt mit einem Amin (beispielsweise einem Alkylamin (z.B. einem C₁₋₁₂-Alkylamin) oder einem Cycloalkylamin oder einem Diamin) zu einem Harnstoffderivat (z.B. einem 1,3-Dialkylharnstoff oder einem cyclischen Harnstoffderivat) umgesetzt.

In einer weiteren beispielhaften Ausführungsform wird das CO₂-Superbase-Addukt mit einem Epoxid zu einem cyclischen Carbonat umgesetzt. Der Reaktionspartner kann beispielsweise zwei oder mehr Epoxidgruppen aufweisen, so dass sich ein Reaktionsprodukt bildet, das zwei oder mehr cyclische Carbonatgruppen aufweist. Das cyclische Carbonatgruppen enthaltende Reaktionsprodukt kann für die Herstellung von Polymeren, z.B. Polyurethanen eingesetzt werden. Bei der Verbindung, die zwei Epoxidgruppen enthält, handelt es sich beispielsweise um ein Terpendiepoxid (z.B. Limonendiepoxid). Nach der Umsetzung mit dem CO₂-Superbase-Addukt wird ein Terpendicarbonat (z.B. ein Limonendicarbonat) erhalten. Um die Synthese des Produkts, das eine oder mehrere cyclische Carbonatgruppen aufweist (z.B. ein Terpendicarbonat) möglichst einfach und effizient durchzuführen, kann es bevorzugt sein, dass der Reaktionslösung, in der die Herstellung des Epoxids (z.B. des Terpendiepoxids) erfolgte, die Superbase zugegeben wird und in diese Superbase- und Epoxid-haltige Flüssigkeit wird anschließend das CO₂-haltige Mischgas (z.B. ein Mischgas, das bei der Biogasaufbereitung anfällt und neben CO₂ noch Methan enthält) eingeleitet.

In dieser beispielhaften Ausführungsform umfasst das erfindungsgemäße Verfahren daher folgende Schritte:
- Herstellung eines Epoxids (z.B. eines Terpendiepoxids) in einer Reaktionslösung,
- Zugabe der Superbase in die Epoxid-haltige Reaktionslösung, so dass eine Superbase- und Epoxid-haltige Flüssigkeit vorliegt,
- Einleiten des CO₂-haltigen Mischgases in die Flüssigkeit unter Bildung des CO₂-Superbase- Addukts,
- Umsetzung des CO₂-Superbase-Addukts mit dem Epoxid unter Bildung eines Reaktionsprodukts, das eine oder mehrere cyclische Carbonatgruppen aufweist (z.B. ein Terpendicarbonat wie Limonendicarbonat).

In einer weiteren beispielhaften Ausführungsform wird das CO₂-Superbase-Addukt mit einem Amin in Anwesenheit des Reduktionsmittels (z.B. einem Silan) zu einem N-Formylamin umgesetzt.

Mit dem erfindungsgemäßen Verfahren lassen sich folgende Vorteile realisieren:
- Während des Absorptionsvorgangs wird das gasförmige CO₂ chemisch an die organische Superbase in Form eines CO₂-Superbase-Addukts gebunden und so aus dem Gasstrom abgeschieden. Gleichzeitig werden die Bindungszustände im CO₂ so geändert, dass seine Reaktionsträgheit überwunden wird und es leichter mit weiteren Edukten reagieren kann. Verglichen zu alternativen Reaktionswegen mit gasförmigem CO₂ kann somit ein Prozessschritt eingespart werden, wobei gleichzeitig Druck und Temperatur während der Reaktion signifikant reduziert werden können.
- Durch die simultane CO₂-Abscheidung und -aktivierung können einer oder mehrere Reaktionsschritte eingespart werden, wodurch sich ein nennenswertes Kosteneinsparungspotenzial ergibt.
- Das neue Verfahren kann mit vergleichsweise geringem Aufwand in bestehende Produktionsstätten integriert werden, wodurch neue additive Wertschöpfungsketten geschaffen werden.
- Durch die Aktivierung des CO₂ mit organischen Superbasen kann bei der nachfolgenden Umsetzung mit geeigneten Reaktionspartnern weitgehend oder sogar vollständig auf die Verwendung von Übergangsmetall-haltigen Katalysatoren verzichtet werden.
- Das Verfahren eignet sich für Gase unterschiedlichster CO₂-Konzentration und kann daher in eine Vielzahl unterschiedlicher Prozesse (u.a. Ammoniaksynthese, Biogaserzeugung, Kraftwerke etc.) integriert werden.
- Durch die potenzielle Vielfältigkeit der synthetisierten Zwischen- und Wertprodukte kann das Verfahren auf den jeweiligen Einsatzfall skaliert werden.

Anhand der nachfolgenden Beispiele wird die Erfindung eingehender erläutert.

### Beispiele

### Beispiel 1 (nicht erfindungsgemäß): Abtrennen von CO₂ aus einem Rauchgas und Umsetzung des CO₂-Superbase-Addukts zu Dibutylharnstoff

Eine Flüssigkeit, die 1,8-Diazobicyclo[5.4.0]undec-7-en (DBU) als Superbase und PEG200 (d.h. Polyethylenglycol mit einem mittleren Molekulargewicht von etwa 200 g/mol) in einem molaren Verhältnis von 1:1 enthielt, wurde vorgelegt.

Unter Rühren wurde ein Modellrauchgas in die Flüssigkeit eingeleitet (Volumenstrom: etwa 200 sccm/min; Normaldruck; Raumtemperatur). Das Modellrauchgas enthielt 15 Vol% CO₂, 84,9 Vol% N₂, 500 ppm SO₂ und 500 ppm NO₂. Es bildete sich ein CO₂-Superbase-Addukt, in dem das CO₂ chemisch gebunden ist. Nach 180 Minuten wurde eine CO₂-Beladungskapazität von 9,7 g/100 g erreicht.

Anschließend wurde unter Rühren und N₂-Atmosphäre n-Butylamin zugegeben. Das molare Verhältnis von DBU zu n-Butylamin betrug 3:2,5. Nach der Zugabe wurde noch 5 Minuten weitergerührt.

Die Lösung wurde anschließend für 24 Stunden bei 110°C erhitzt. Zum Beenden der Reaktion zwischen dem CO₂-Superbase-Addukt und dem n-Butylamin wurde das Reaktionsgefäß in ein Eisbad gestellt. Die Ausbeute an 1,3-Dibutylharnstoff wurde mittels Gaschromatographie bestimmt und betrug 10,4%.

Obwohl das Mischgas einen relativ geringen CO₂-Anteil aufwies und außerdem Schwefel- und Stickoxide, die als potentielle Katalysatorgifte bekannt sind, enthielt, konnte in Anwesenheit der Superbase eine effektive Entfernung des CO₂ aus dem Rauchgas realisiert werden und das dabei gebildete CO₂-Superbase-Addukt zeigte eine ausreichend hohe Reaktivität für die Bildung von Dibutylharnstoff.

### Beispiel 2 (nicht erfindungsgemäß): Abtrennen von CO₂ aus einem CO₂-Wasserdampf-Mischgas und Umsetzung des CO₂-Superbase-Addukts zu Dibutylharnstoff

Eine Flüssigkeit, die 1,8-Diazobicyclo[5.4.0]undec-7-en (DBU) als Superbase und PEG200 (d.h. Polyethylenglycol mit einem mittleren Molekulargewicht von etwa 200 g/mol) in einem molaren Verhältnis von 1:1 enthielt, wurde vorgelegt.

Unter Rühren wurde ein mit Wasserdampf gesättigtes CO₂ in die Flüssigkeit eingeleitet (Volumenstrom: etwa 200 sccm/min). Es fiel ein weißer Feststoff aus. Es bildete sich ein CO₂-Superbase-Addukt, in dem das CO₂ chemisch gebunden ist. Nach 180 Minuten wurde eine CO₂-Beladungskapazität von 12,4 g/100 g erreicht.

Anschließend wurde unter Rühren und N₂-Atmosphäre n-Butylamin zugegeben. Das molare Verhältnis von DBU zu n-Butylamin betrug 3:2,5. Nach der Zugabe wurde noch 5 Minuten weiter gerührt.

Die Lösung wurde anschließend für 72 Stunden bei 110°C erhitzt. Zum Beenden der Reaktion zwischen dem CO₂-Superbase-Addukt und dem n-Butylamin wurde das Reaktionsgefäß in ein Eisbad gestellt. Die Ausbeute an 1,3-Dibutylharnstoff wurde mittels Gaschromatographie bestimmt und betrug 26,9%.

### Beispiel 3 (nicht erfindungsgemäß): Abtrennen von CO₂ aus einem Rauchgas und Umsetzung des CO₂-Superbase-Addukts zu N-Formylmorpholin

In einem druckfesten Edelstahlreaktor wurden 1,5,7-Triazobicyclo[4.4.0]dec-5-en (TBD) als Superbase, Morpholin als Reaktionspartner und Phenylsilan als Reduktionsmittel vorgelegt. Das molare Verhältnis der Komponenten betrug 0,05: 1: 1. In den Reaktor wurde bei Raumtemperatur ein Modelrauchgas (15 Vol% CO₂, 84,9 Vol% N₂, 500 ppm SO₂ und 500 ppm NO₂) eingeleitet, bis ein Druck von 16 bar im Reaktor erreicht wurde. Anschließend wurde der Reaktor bei diesem Druck auf 100°C aufgeheizt. Nach einer Reaktionsdauer von 24 h wurde der Reaktor auf Raumtemperatur abgekühlt und der Gehalt an N-Formylmorpholin im Reaktionsgemisch mittels Gaschromatographie bestimmt. Die Ausbeute an N-Formylmorpholin betrug 10,2%.

Wie schon bei den anderen Beispielen zeigt sich, dass trotz des relativ geringen CO₂-Anteils im Mischgas und der Anwesenheit von Schwefel- und Stickoxiden, die als potentielle Katalysatorgifte bekannt sind, die Verwendung der organischen Superbase eine effektive Entfernung des CO₂ aus dem Rauchgas ermöglicht und das dabei gebildete Superbase/CO₂-Addukt eine ausreichend hohe Reaktivität für die Bildung von N-Formylmorpholin aufweist.

### Beispiele 4-6

In den Beispielen 4-6 wurde der Einfluss des Lösungsmittels untersucht. In Beispiel 4 wurde ein CO₂-Gas in eine Flüssigkeit eingeleitet, die DBU als Superbase und PEG200, jedoch kein weiteres Lösungsmittel enthielt. In Beispiel 5 enthielt die Flüssigkeit neben DBU und PEG200 auch noch ein cyclisches Amid, nämlich N-Methyl-2-pyrrolidon, als Lösungsmittel. In Beispiel 6 enthielt die Flüssigkeit DMF als Lösungsmittel.

### Beispiel 4 (Vergleich)

Eine Flüssigkeit, die 1,8-Diazobicyclo[5.4.0]undec-7-en (DBU) als Superbase und PEG200 (d.h. Polyethylenglycol mit einem mittleren Molekulargewicht von etwa 200 g/mol) in einem molaren Verhältnis von 1:1 enthielt, wurde vorgelegt.

Unter Rühren wurde ein CO₂-Gas in die Flüssigkeit eingeleitet (Volumenstrom: etwa 200 sccm/min; Normaldruck; Raumtemperatur). Es bildete sich ein CO₂-Superbase-Addukt, in dem das CO₂ chemisch gebunden ist. Nach 180 Minuten wurde eine CO₂-Beladungskapazität von 11,96 g/100 g erreicht.

Anschließend wurde unter Rühren und N₂-Atmosphäre n-Butylamin zugegeben. Das molare Verhältnis von DBU zu n-Butylamin betrug 3:2,5. Nach der Zugabe wurde noch 5 Minuten weitergerührt.

Die Lösung wurde anschließend bei 110°C erhitzt. Die Ausbeuten an 1,3-Dibutylharnstoff wurden mittels Gaschromatographie bestimmt. In Abhängigkeit von der Reaktionszeit ergaben sich folgende Ausbeuten: 24,9% (48 Stunden) und 48,5% (72 Stunden).

### Beispiel 5

In Beispiel 5 enthielt die Flüssigkeit, in die das CO₂-Gas eingeleitet wurde, noch N-Methyl-2-pyrrolidon (NMP) als Lösungsmittel. NMP lag in der Flüssigkeit in einer Menge von 33 Vol% vor. Abgesehen von der Anwesenheit des NMP als Lösungsmittel entsprachen die Verfahrensbedingungen in Beispiel 5 denen in Beispiel 4. In Abhängigkeit von der Reaktionszeit ergaben sich in Beispiel 5 folgende Ausbeuten: 10,5% (24 Stunden), 26,5% (48 Stunden) und 62,3% (72 Stunden).

### Beispiel 6 (Vergleich)

In Beispiel 6 enthielt die Flüssigkeit, in die das CO₂-Gas eingeleitet wurde, noch Dimethylformamid (DMF) als Lösungsmittel. DMF lag in der Flüssigkeit in einer Menge von 33 Vol% vor. Abgesehen von der Anwesenheit des DMF als Lösungsmittel entsprachen die Verfahrensbedingungen in Beispiel 6 denen in Beispiel 4.. Nach einer Reaktionszeit von 24 Stunden ergab sich eine Ausbeute von 1,5%.

## Patentansprüche

1. Verfahren zur CO₂-Abscheidung und -Nutzung, umfassend:
- Einleiten eines CO₂-haltigen Mischgases in eine Flüssigkeit, die eine organische Superbase oder ein Salz einer organischen Superbase enthält, so dass sich ein CO₂-Superbase-Addukt, in dem das CO₂ chemisch gebunden ist, bildet, wobei
- die organische Superbase ein Amidin oder ein Guanidinderivat oder ein Gemisch davon ist und
- die Flüssigkeit ein cyclisches Amid oder eine cyclische Harnstoffverbindung als Lösungsmittel enthält,
- Umsetzung des CO₂-Superbase-Addukts mit einem chemischen Reaktionspartner unter Bildung eines Reaktionsprodukts, wobei der Reaktionspartner, mit dem das CO₂-Superbase-Addukt umgesetzt wird, ein Amin, ein Aminobenzonitril, ein Alkinol, ein Epoxid, ein Aziridin oder ein Reduktionsmittel oder eine Kombination aus mindestens zwei dieser Reaktionspartnerein ist, wobei das Reduktionsmittel ein Silan oder Wasserstoff ist.

2. Verfahren nach Anspruch 1, wobei das Mischgas neben dem CO₂ noch Stickstoff, ein oder mehrere Schwefeloxide, ein oder mehrere Stickoxide, Wasserdampf, NH₃, Methan, CO oder eine Schwefelverbindung oder ein Gemisch aus mindestens zwei dieser gasförmigen Verbindungen enthält.

3. Verfahren nach Anspruch 1 oder 2, wobei das CO₂-haltige Mischgas ein Rauchgas, ein Methan-haltiges Gas aus der Biogasaufbereitung, ein NH₃-haltiges Abgas aus der Ammoniaksynthese, ein bei der Bioethanolherstellung anfallendes Wasserdampf-haltiges Gas oder ein bei der Stahlherstellung anfallendes Mischgas ist.

4. Verfahren nach einem der vorstehenden Ansprüche, wobei das Amidin 1,8-Diazobicyclo[5.4.0]undec-7-en, 1,5-Diazabicyclo[4.3.0]non-5-en oder N-Methyltetrahydropyrimidine oder ein Gemisch aus mindestens zwei dieser Verbindungen ist; oder das Guanidinderivat ein 1,1,3,3-Tetra-C₁₋₄-Alkyl-Guanidin, 1,5,7-Triazobicyclo[4.4.0]dec-5-en, 7-Methyl-1,5,7-triazabicyclo[4.4.0]dec-5-en oder N-(1,3-Dimethylimidazolidin-2-yliden)cyclohexylamin oder ein Gemisch aus mindestens zwei dieser Verbindungen ist.

5. Verfahren nach einem der vorstehenden Ansprüche, wobei die Flüssigkeit, in die das CO₂-haltige Mischgas eingeleitet wird, neben der Superbase noch einen Alkohol enthält.

6. Verfahren nach einem der vorstehenden Ansprüche, wobei die Bildung des CO₂-Superbase-Addukts und dessen Umsetzung mit einem oder mehreren Reaktionspartnern in demselben Reaktor erfolgen.

7. Verfahren nach einem der Ansprüche 1 bis 5, wobei die Bildung des CO₂-Superbase-Addukts in einem ersten Reaktor erfolgt, das CO₂-Superbase-Addukt anschließend aus dem ersten Reaktor entfernt und in einen zweiten Reaktor eingebracht wird, in dem die Umsetzung mit dem chemischen Reaktionspartner erfolgt.

8. Verfahren nach einem der vorstehenden Ansprüche, wobei der Reaktionspartner bereits während der Bildung des CO₂-Superbase-Addukts in der Flüssigkeit vorliegt; oder wobei das CO₂-Superbase-Addukt in Abwesenheit des Reaktionspartners gebildet wird und erst nach seiner Bildung mit dem Reaktionspartner in Kontakt gebracht wird.

9. Verfahren nach einem der vorstehenden Ansprüche, wobei das CO₂-Superbase-Addukt mit einem Amin zu einem Harnstoffderivat umgesetzt wird.

10. Verfahren nach einem der Ansprüche 1 bis 8, wobei das CO₂-Superbase-Addukt mit einem Amin in Anwesenheit des Reduktionsmittels zu einem N-Formylamin umgesetzt wird.

11. Verfahren nach einem der Ansprüche 1 bis 8, wobei das CO₂-Superbase-Addukt mit einem Epoxid zu einem cyclischen Carbonat umgesetzt wird.

12. Verfahren nach Anspruch 11, wobei das Epoxid ein Terpendiepoxid ist und das cyclische Carbonat ein Terpendicarbonat ist.

13. Verfahren nach Anspruch 11 oder 12, wobei die Superbase einer Reaktionslösung, in der das Epoxid hergestellt wurde, zugegeben wird, so dass eine Superbase- und Epoxid-haltige Flüssigkeit vorliegt und das CO₂-haltige Mischgas in die Superbase- und Epoxid-haltige Flüssigkeit eingeleitet wird.

## Claims

1. Method for CO₂ capture and utilization, comprising:
- introduction of a CO₂-containing mixed gas into a liquid which contains an organic superbase or a salt of an organic superbase so as to form a CO₂-superbase adduct in which the CO₂ is chemically bound, wherein
- the organic superbase is an amidine or a guanidine derivative or a mixture thereof and
- the liquid contains a cyclic amide or a cyclic urea compound as solvent,
- reaction of the CO₂-superbase adduct with a chemical reaction partner to form a reaction product, wherein the reaction partner with which the CO₂-superbase adduct is reacted is an amine, an aminobenzonitrile, an alkynol, an epoxide, an aziridine or a reducing agent or a combination of at least two of these reaction partners, wherein the reducing agent is a silane or hydrogen.

2. Method according to Claim 1, wherein the mixed gas also contains nitrogen, one or more sulfur oxides, one or more nitrogen oxides, water vapour, NH₃, methane, CO or a sulfur compound or a mixture of at least two of these gaseous compounds in addition to the CO₂.

3. Method according to Claim 1 or 2, wherein the CO₂-containing mixed gas is a flue gas, a methane-containing gas from biogas processing, an NH₃-containing offgas from the synthesis of ammonia, a water vapour-containing gas obtained in bioethanol production or a mixed gas obtained in steel production.

4. Method according to any of the preceding claims, wherein the amidine is 1,8-diazobicyclo[5.4.0]undec-7-ene, 1,5-diazabicyclo[4.3.0]non-5-ene or N-methyltetrahydropyrimidine or a mixture of at least two of these compounds; or the guanidine derivative is a 1,1,3,3-tetra-C₁₋₄-alkyl-guanidine, 1,5,7-triazobi-cyclo[4.4.0]dec-5-ene, 7-methyl-1,5,7-triazabi-cyclo[4.4.0]dec-5-ene or N-(1,3-dimethylimidazolin-2-ylidene)cyclohexylamine or a mixture of at least two of these compounds.

5. Method according to any of the preceding claims, wherein the liquid into which the CO₂-containing mixed gas is introduced also contains an alcohol in addition to the superbase.

6. Method according to any of the preceding claims, wherein the formation of the CO₂-superbase adduct and the reaction thereof with one or more reaction partners occur in the same reactor.

7. Method according to any of Claims 1 to 5, wherein the formation of the CO₂-superbase adduct occurs in a first reactor, and the CO₂-superbase adduct is subsequently removed from the first reactor and introduced into a second reactor in which the reaction with the chemical reaction partner occurs.

8. Method according to any of the preceding claims, wherein the reaction partner is already present in the liquid during the formation of the CO₂-superbase adduct; or wherein the CO₂-superbase adduct is formed in the absence of the reaction partner and this adduct is brought into contact with the reaction partner only after the adduct has been formed.

9. Method according to any of the preceding claims, wherein the CO₂-superbase adduct is reacted with an amine to form a urea derivative.

10. Method according to any of Claims 1 to 8, wherein the CO₂-superbase adduct is reacted with an amine in the presence of the reducing agent to form an N-formylamine.

11. Method according to any of Claims 1 to 8, wherein the CO₂-superbase adduct is reacted with an epoxide to form a cyclic carbonate.

12. Method according to Claim 11, wherein the epoxide is a terpene diepoxide and the cyclic carbonate is a terpene dicarbonate.

13. Method according to Claim 11 or 12, wherein the superbase is added to a reaction solution in which the epoxide has been produced, so that a liquid containing superbase and epoxide is present, and the CO₂-containing mixed gas is introduced into the liquid containing superbase and epoxide.

## Revendications

1. Procédé pour le captage et l'utilisation de CO₂, comprenant :
- l'introduction d'un mélange de gaz contenant du CO₂ dans un liquide qui contient une superbase organique ou un sel d'une superbase organique, de sorte qu'un adduit CO₂-superbase soit formé, dans lequel le CO₂ est chimiquement lié,
o la superbase organique étant une amidine ou un dérivé de guanidine ou un mélange correspondant et
o le liquide contenant un amide cyclique ou un composé de type urée cyclique en tant que solvant,
- la mise en réaction de l'adduit CO₂-superbase avec un partenaire de réaction chimique avec formation d'un produit de réaction, le partenaire de réaction, avec lequel l'adduit CO₂-superbase est mis en réaction, étant une amine, un aminobenzonitrile, un alcynol, un époxyde, une aziridine ou un agent de réduction ou une combinaison d'au moins deux de ces partenaires de réaction, l'agent de réduction étant un silane ou l'hydrogène.

2. Procédé selon la revendication 1, le mélange de gaz contenant, outre le CO₂, aussi de l'azote, un ou plusieurs oxydes de soufre, un ou plusieurs oxydes d'azote, de la vapeur d'eau, du NH₃, du méthane, du CO ou un composé du soufre ou un mélange d'au moins deux de ces composés gazeux.

3. Procédé selon la revendication 1 ou 2, le mélange gazeux contenant du CO₂ étant un gaz de fumée, un gaz contenant du méthane provenant du traitement de biogaz, un gaz d'échappement contenant du NH₃ provenant de la synthèse de l'ammoniac, un gaz contenant de la vapeur d'eau produit lors de la préparation de bioéthanol ou un mélange de gaz produit lors de la fabrication d'acier.

4. Procédé selon l'une quelconque des revendications précédentes, l'amidine étant le 1,8-diazobicyclo[5.4.0]undéc-7-ène, le 1,5-diazabicyclo[4.3.0]non-5-ène ou la N-méthyltétrahydropyrimidine ou un mélange d'au moins deux de ces composés ; ou le dérivé de guanidine étant une 1,1,3,3-tétra-C₁₋₄-alkyl-guanidine, le 1,5,7-triazobicyclo[4.4.0]déc-5-ène, le 7-méthyl-1,5,7-triazabicyclo[4.4.0]déc-5-ène ou la N-(1,3-diméthylimidazolidin-2-ylidène)cyclohexylamine ou un mélange d'au moins deux de ces composés.

5. Procédé selon l'une quelconque des revendications précédentes, le liquide dans laquelle le mélange gazeux contenant du CO₂ est introduit contenant, outre la superbase, aussi un alcool.

6. Procédé selon l'une quelconque des revendications précédentes, la formation de l'adduit CO₂-superbase et sa mise en réaction avec un ou plusieurs partenaires de réaction étant réalisées dans le même réacteur.

7. Procédé selon l'une quelconque des revendications 1 à 5, la formation de l'adduit CO₂-superbase étant réalisée dans un premier réacteur, l'adduit CO₂-superbase étant évacué ensuite du premier réacteur et introduit dans un deuxième réacteur, dans lequel la mise en réaction avec le partenaire de réaction chimique est réalisée.

8. Procédé selon l'une quelconque des revendications précédentes, le partenaire de réaction étant déjà présent dans le liquide pendant la formation de l'adduit CO₂-superbase ; ou l'adduit CO₂-superbase étant formé en l'absence du partenaire de réaction et seulement mis en contact avec le partenaire de réaction après sa formation.

9. Procédé selon l'une quelconque des revendications précédentes, l'adduit CO₂-superbase étant mis en réaction avec une amine pour donner un dérivé d'urée.

10. Procédé selon l'une quelconque des revendications 1 à 8, l'adduit CO₂-superbase étant mis en réaction avec une amine en présence de l'agent de réduction pour donner une N-formylamine.

11. Procédé selon l'une quelconque des revendications 1 à 8, l'adduit CO₂-superbase étant mis en réaction avec un époxyde pour donner un carbonate cyclique.

12. Procédé selon la revendication 11, l'époxyde étant un diépoxyde de terpène et le carbonate cyclique étant un dicarbonate de terpène.

13. Procédé selon la revendication 11 ou 12, la superbase étant ajoutée à une solution de réaction dans laquelle l'époxyde a été préparé, de sorte qu'un liquide contenant la superbase et l'époxyde est présent et le mélange gazeux contenant du CO₂ est introduit dans le liquide contenant la superbase et l'époxyde.
